# EUROPEAN PATENT SPECIFICATION

(11) **EP 4 160 992 B1**
(45) Date of publication and mention of the grant of the patent: **12.06.2024**
(21) Application number: 21200111.9
(22) Date of filing: 30.09.2021
(51) Int. Cl.: H04M 15/00, H04L 12/14, H04W 4/24

(54) **APPARATUS, METHODS, AND COMPUTER PROGRAMS**
VORRICHTUNG, VERFAHREN UND COMPUTERPROGRAMME
APPAREIL, PROCÉDÉS ET PROGRAMMES INFORMATIQUES

(43) Date of publication of application: 05.04.2023
(73) Proprietor: Nokia Technologies Oy, 02610 Espoo (FI)
(72) Inventor: Papageorgiou, Apostolos, Munich (DE); Thiebaut, Laurent, Antony (FR); Milinski, Alexander, Munich (DE)
(74) Representative: Page White Farrer

(56) References cited:
- US-A1- 2021 184 875
- XIAOMI: "eNS_502_KI#5_Update of PDU Session Procedures", 3GPP DRAFT; S2-2104319, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. e-meeting; 20210412 - 20210416 10 May 2021 (2021-05-10), XP052004630, Retrieved from the Internet: URL:https://ftp.3gpp.org/tsg_sa/WG2_Arch/T SGS2_145E_Electronic_2021-05/Docs/S2-21043 19.zip S2-2104319_eNS_502_KI#5_Update of PDU Session Procedures.docx [retrieved on 2021-05-10]

## Description

### Field

**The** present disclosure relates to apparatus, methods, and computer programs, and in particular but not exclusively to apparatus, methods and computer programs for network apparatuses.

### Background

**A** communication system can be seen as a facility that enables communication sessions between two or more entities such as user terminals, access nodes and/or other nodes by providing resources for communications between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known is the long-term evolution (LTE) or the Universal Mobile Telecommunications System (UMTS) radio-access technology. Another example communication system is so called 5G system that allows user equipment (UE) or user device to contact a 5G core via e.g. new radio (NR) access technology or via other access technology such as Untrusted access to 5GC or wireline access technology. Access to a 5G core may also be provided via an alternative network such as, for example, UTRAN or UMTS.

XIAOMI: "eNS_502_KI#5_Update of PDU Session Procedures", 3GPP Draft, S2-2104319 is a change request relating to updating procedures of monitoring and enforcement of the Total Bandwidth per slice identifier that is performed aggregating the Maximum Bit Rate allocated to each packet data unit session established in that identified slice.

United States Patent application publication number US 2021/184875 A1 relates to a session management function that sends, to a policy control function, a policy request message. The policy request message comprises a non-public network identifier of a non-public network through which a wireless device accesses a public land mobile network. The policy request message comprises an identifier of the public land mobile network. The session management function receives, from the policy control function, a policy response message comprising a charging control policy.

### Summary

**The** present invention is defined by the appended independent claims. Certain more specific aspects are defined by the dependent claims.

### Brief description of Figures

Examples will now be described, by way of example only, with reference to the accompanying Figures in which:
Figures 1A and 1B show a schematic representation of part of an example 5G system;
Figure 2 shows a schematic representation of a network apparatus;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network;
Figures 6 to 11 are signalling flow charts illustrating example signalling; and
Figures 12 to 15 are flowcharts showing example operations that may be performed by apparatus described herein.

### Detailed description

In the following, certain aspects are explained with reference to mobile communication devices capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems with analogous components (for example, current 6G proposals).

3GPP refers to a group of organizations that develop and release different standardized communication protocols. 3GPP is currently developing and publishing documents related to Release 16, relating to 5G technology, with Release 17 currently being scheduled for 2022.

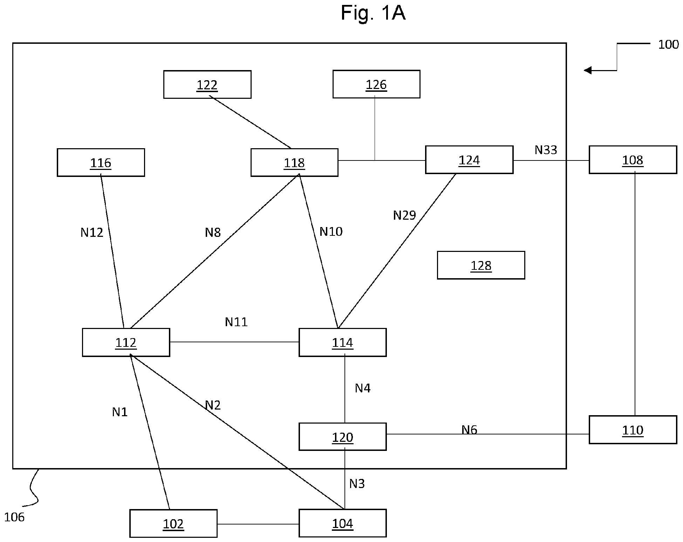

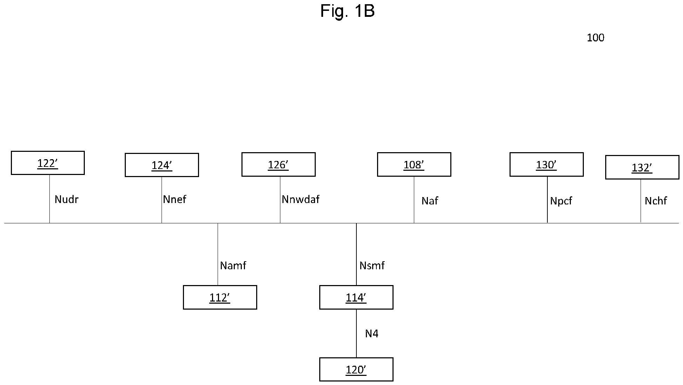

Before explaining in detail the exemplifying embodiments, certain general principles of a 5G wireless communication system are briefly explained with reference to Figures 1A and 1B.

Figure 1A shows a schematic representation of at least part of an example 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

**The** 5G RAN may comprise one or more gNodeB (gNB) distributed unit functions connected to one or more gNodeB (gNB) unit functions. The RAN may comprise one or more access nodes.

**The** 5GC 106 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

The network may further comprise a management data analytics service (MDAS). The MDAS may provide data analytics of different network related parameters including for example load level and/or resource utilisation. For example, the MDAS for a network function (NF) can collect the NF's load related performance data, e.g., resource usage status of the NF. The analysis of the collected data may provide forecast of resource usage information in a predefined future time. This analysis may also recommend appropriate actions e.g., scaling of resources, admission control, load balancing of traffic, etc.

Figure 1B shows a schematic representation of a 5GC 106' represented in current 3GPP specifications.

Figure 1B shows a UPF 120' connected to an SMF 114' over an N4 interface. The SMF 114' is connected to each of a UDR 122', an NEF 124', an NWDAF 126', an AF 108', a Policy Control Function (PCF) 130', an AMF 112', and a Charging function 132' over an interconnect medium that also connects these network functions to each other.

In the 5G system, Session Management Policy Data for a session of a specific subscriber is retrieved from the subscription data of the specific subscriber, the subscription data being stored in the Unified Data Repository (UDR). This Session Management Policy Data is also referred to as "PDU Session related policy information" in current specifications of 3GPP. The retrieved Session Management Policy Data is used by the Policy and Control Function (PCF) in order to determine various details of a PDU Session of the subscriber. This mainly takes place upon PDU Session establishment but may also be performed during the lifetime of a PDU Session.

Having retrieved the Session Management Policy Data for a session of a specific subscriber, the PCF determines and activates Policy and Charging Control (PCC) rules for a PDU session in the SMF for a plurality of purposes. For example, they may be used for determining policies for quality of service (QoS) and routing. As another example, the PCC rules may comprise instructions for triggering and reporting the detection of events.

In this second example, the SMF may instruct the UPF to detect the events in question. This may be achieved using a Subscribe-Notify procedure. Under this procedure, when the UPF detects a subscribed-to event, it reports the detected event to the SMF. The SMF then reports the event occurrence to the PCF, as per the PCC rule (e.g. start, stop, service data flow descriptions for the detected application traffic, if possible etc.). The PCF may take appropriate policy decisions based on the information. These PCC rules (also referred to hereunder as policies) may relate to a specific session and subscriber.

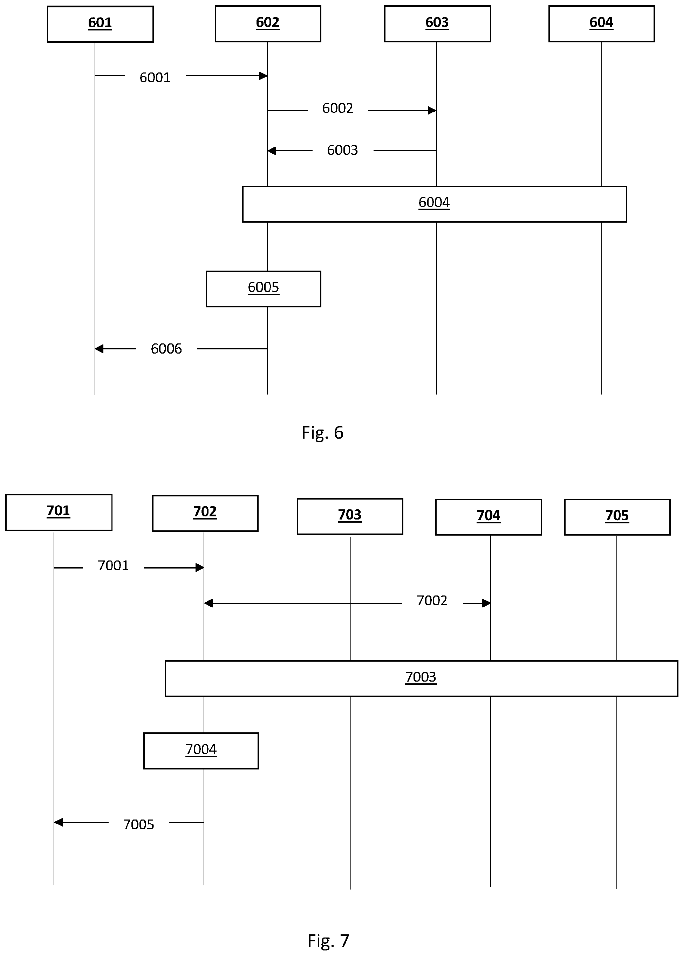

**The** retrieval of Session Management Policy Data by the PCF is illustrated with respect to Figure 6, which is described in further detail below.

Figure 6 illustrates signalling that may be performed between a Session Management Function (SMF) 601, a PCF 602, a UDR 603, and a Charging Function (CHF) 604.

**At** 6001, the SMF 601 signals the PCF 602. This signalling of 6001 is a request for the PCF to create a policy/policy decision for a particular session. This policy/policy decision may be at least one PCC rule. It is understood that later references to policies/policy decisions being determined also encompasses references to PCC rules being determined. Using current 3GPP terminology, this may be labelled as "Npcf_SMPolicyControl_Create".

At 6002 and 6003, the PCF 602 and the UDR may exchange signalling for retrieving information associated with the subscriber participating in the particular session. These steps may be performed when the PCF 602 does not already have the subscriber's subscription related information (e.g. when the request relates to a new session being established).

Therefore, in 6002, the PCF 602 signals a query (e.g. an Nudr_DM_Query message, as currently defined in 3GPP) to the UDR 603. The PCF 602 receives a subscription response from the UDR 603 in response to the query of 6002 (the subscription response may be, for example, an Nudr_DM_Subscribe message, as currently defined in 3GPP). The Nudr_DM_Query message sent to the UDR may comprise an identifier of the subscriber (e.g. Subscription Permanent Identifier (SUPI), which is a 5G globally unique identifier allocated to each subscriber). The Nudr_DM_Query message sent to the UDR may comprise a Data Network Name (DNN) for the session. A DNN is the name by which an external network is known within a Public Landline Mobile Network (PLMN), with the PLMN providing access at least that external network. The PLMN may provide access to multiple external networks, each external network having an associated DNN. The Nudr_DM_Query message sent to the UDR may comprise an identifier for the network slice used for providing the session (e.g. the Single Network Slice Selection Assistance Information (S-NSSAI)). The Nudr_DM_Query message sent to the UDR may additionally comprise at least one of Policy Data for the subscriber and/or the session, Protocol Data Unit (PDU) Session policy control data, and/or Remaining allowed Usage data for the session and/or the subscriber.

**At** 6004, the PCF 602 retrieves charging information for the subscriber of the session from the CHF 604.

**At** 6005, the PCF 602 makes a policy decision in dependence on information stored at the PCF 602 (or memory storage otherwise accessible by the PCF 602) and/or in dependence on information received through the exchange of 6002 to 6003 (when performed).

At 6006, the PCF 602 responds to the signalling of 6001 by returning the policy decision determined at 6005.

The Session Management Policy Data may comprise various static policies fixed in the subscription of the subscriber. These static policies may comprise, for example, a list of services that the subscriber is allowed to access, subscribed GBR (Guaranteed BitRate), usage limits, etc. However, Session Management Policy Data may also comprise a dynamic part that is related to usage monitoring, such as the "remaining allowed usage". The "remaining allowed usage" is updated during the lifetime of a PDU Session based on the usage reports that the PCF receives from the User Plane Function (UPF) via the Session Management Function (SMF). This is illustrated in Figure 7.

Figure 7 illustrates signalling that may be performed between an SMF 701, a PCF 702, a UDR 703, an application function (AF) 704, and a CHF 705.

At 7001, the SMF 701 signals a policy update request to the PCF 702. Using current terminology, this message may be an Npcf_SMPolicyControl_Update request.

At 7002, the PCF 702 exchanges signalling with the application function 704 to report that an event identified by the PCC rules has occurred and/or to report information identified in the PCC rules as being of interest to the application function 704. As mentioned briefly above, in addition to routing and/or OoS-related information, the PCC rules may comprise indications of events on which reporting is to be performed. Event reporting is performed when threshold criteria comprised within the PCC rules are met for a subscriber's session. The threshold criteria may thus be said to define criteria that, when met, triggers the sending of a reporting message to the PCF that informs the PCF that the threshold criteria has been met. This threshold criteria may be simply a determination that a particular event has occurred. This threshold criteria may be a determination that a particular combination of events has occurred. This threshold criteria may thus be said to be an indication of an event and/or information to which the application function would like to receive information. At 7003, the PCF 703 exchanges signalling with the CHF 705 to retrieve a spending limit report that indicates how much charging has been performed in the session so far, based on the information received in 7001.

At 7004, the PCF 702 makes a policy decision based on the information determined in 7001 and 7003. For example, using current 3GPP terminology, when the SMF 701 reported accumulated usage for the PDU session in 7001, the PCF 702 deducts the value from the remaining allowed usage for the subscriber, DNN, and S-NSSAI in the UDR by invoking Nudr_DM_Update service operation. In essence, this policy decision requests that the UDR use some "updated data" comprised within the policy decision to update a remaining allowed usage value/attribute inside the policy data that are associated with certain parameters. The parameters may be, for example,: SUPI, DNN, and S-NSSAI.

At 7005, the PCF 702 signals the policy decision determined in 7004 to the SMF 702. Using current 3GPP terminology. This may be a response to the update request of 7001. This may be performed using an Npcf_SMPolicyControl_Update response.

Currently, due to the fact that Session Management Policy Data is owned and handled only by the Home Public Landline Mobile Network (HPLMN), usage monitoring is not applicable in certain roaming cases, such as, for example, the local breakout (LBO) roaming case in 5G. For conciseness, the following considers roaming from an LBO case. However, it is understood that this is used as an example, and that the present discussion also applies to other roaming cases. For example, in 4G cases, the dynamic part of the policy cannot be performed solely by entities located within a Visited Public Landline Mobile Network (VPLMN): interaction with the HPLMN is performed in these cases. Further, for simplicity, the following refers to visited and home PLMNs. However, it is understood that the presently described techniques may be applied to different domains.

4G raised the possibility of having usage monitoring in LBO cases that is performed by the HPLMN. This would utilize a so-called S9 interface between a Home-Policy and Charging Rules Function (PCRF) (i.e. the PCRF in HPLMN), and a Visited-PCRF (i.e. the PCRF in the VPLMN), which is discussed further below.

**.** In Local breakout, a user which makes mobility within and across one operator-defined network region has its routing optimized such that user plane traffic does not need to leave the current region. Local Breakout is also a feature of 5G networks, and may be utilised in later 3GPP communications standards (e.g. 6G etc.). Local Breakout is supported in some 3GPP networks by the use of an S9 interface between a Home-Policy and Charging Rules Function and a Visited-Policy and Charging Rules Function. This interface is used to transfer policy decisions (e.g. Policy Charging Control (PCC) rules and/or Quality of Service rules) that were generated in the home network for application in the visited network and to transport events that may occur in the visited network to the home network. In general, a Policy and Charging Rules Function (PCRF) supports service data flow detection, policy enforcement and flow-based charging.

In more detail, in 4G/Evolved Packet Core (EPC) 3GPP specifications, there exists an S9 interface between the PCRF of the HPLMN and the PCRF of the VPLMN. This may be used by the VPLMN for retrieving policies from the HPLMN, including policies related to usage monitoring information in the local breakout roaming scenario.

Therefore, usage monitoring and appropriate (policy-related) reactions are possible in LBO PDU Sessions in 4G/EPC, and an equivalent solution could be applied in 5G communication networks, with the PCF playing the role of the PCRF, the UDR playing the role of the SPR (Subscriber Profile Repository), and the related functionality of the S9 interface being introduced in the N24 interface, which is the 5G interface between the PCF of the HPLMN and the PCF of the VPLMN.

However, based on this procedure, the usage monitoring would still be performed in the HPLMN. This would lead to a large amount of inter-PLMN signalling, utilizing excessive network resources, a lack of VPLMN-determined policies, and slow PCF reactions to SMF events.

Furthermore, the use of the S9 interface in LTE networks was not ultimately implemented in the EPC due to operators wanting to limit signalling over the inter operator interfaces to the bare minimum to minimize network congestion.

As an aside, it is noted that although the 5GC uses an inter-PLMN PCF-PCF interface, which is labelled as N24 in the 3GPP specifications, this interface relates to the PCF(s) serving the AMF (i.e. to managing policies at UE level) while the usage monitoring would involve the PCF(s) serving the SMF (managing policies at a PDU Session level) and different PCF(s) are often deployed to serve the AMF from the PCF(s) deployed to serve the SMF.

Moreover, in all 5G and 4G cases, no mechanism exists for performing usage monitoring at the VPLMN, which means that the VPLMN does not handle or monitor any usage limits and has no impact on actions that can be performed based on such limits.

As the VPLMN currently has no technical mechanism for applying usage-based policies, this prevents entities in the VPLMN from being able to help prevent cases of excessive data usage by roamers by reacting upon the surpassing of an HPLMN-determined usage limit. The current VPLMN also does not currently have any technical mechanism for protecting the VPLMN network from overload caused by inbound roamers by reacting upon the surpassing of VPLMN-determined usage limits.

To address at least one of the above-mentioned issues the following describes a mechanism for performing usage monitoring at the VPLMN and enforcing VPLMN-determined policies. These policies may be enforced upon the session reaching certain usage limits in PDU Sessions of users that are roaming in local breakout mode.

In particular, the VPLMN described in the following may determine usage limits for a roamer upon the establishment of the PDU Session. These usage limits may be determined in a plurality of different ways. For example, the usage limits may be retrieved with a single interaction from the HPLMN, and may be specific to the subscriber-VPLMN combination. As another example, the limits may be locally stored at the VPLMN and be common for all subscribers of the HPLMN.

**The** VPLMN may be configured to use dynamic/temporary database entries of Session Management Policy Data for the purpose of monitoring the allowed remaining usage of the PDU Session. This information may be provided via, for example, a UDR.

As an example of the use of dynamic database entries, the VPLMN may be configured to keep track of a remaining allowed usage using usage reports sent from the UPF to the SMF to the V-PCF to the UDR in VPLMN. This process may be supplemented by a mechanism for resetting and/or removing entries based on the time period for which the usage limits apply. This complementary mechanism may be used to allow for Session Management Policy Data entries of roamers to be temporary in the VPLMN.

These concepts are illustrated further in the examples discussed below.

The following describes examples in which Session Management Policy Association Establishment and SMF-initiated Session Management Policy Association Modification procedures described above are modified to comprise a sequence of interactions and some elements that may be used in the roaming case and allow for VPLMN-performed usage monitoring (and monitoring-based policy enforcement).

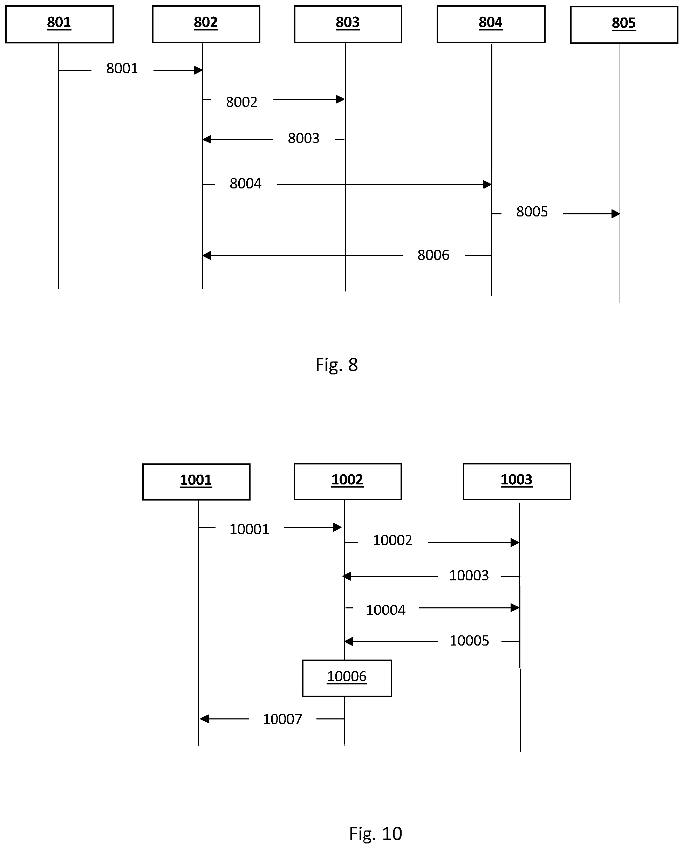

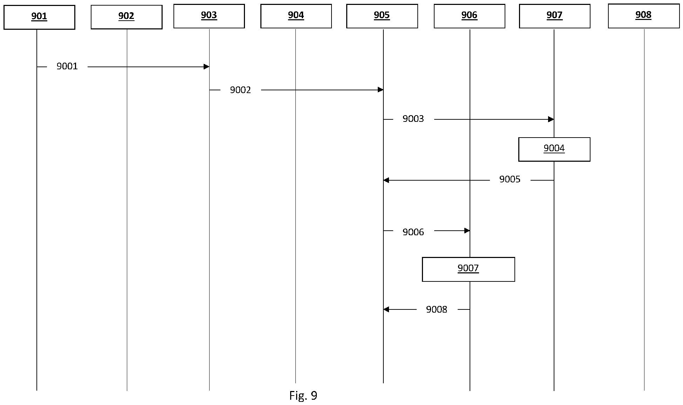

In the following, Figures 8 and 9 show examples of how the usage limits may be obtained in an initial case. For example, Figure 8 shows an example in which a PCF in the VPLMN retrieves a value for the usage limit based on a combination of an identifier for the subscriber and an identifier for the VPLMN. Figure 9, in contrast, illustrates an example in which a V-SMF retrieves usage limit information from a H-UDM.

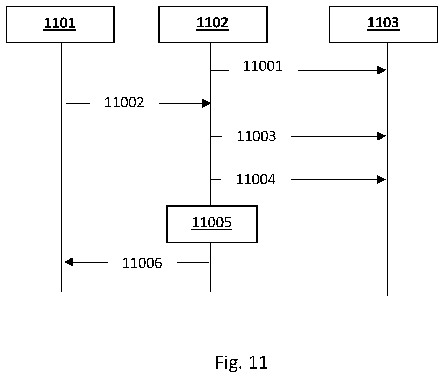

Further, Figure 10 illustrates an example of how a policy may be created when usage information is retrieved from a subscriber's subscription information that is stored in a V-UDR, while Figure 11 illustrates an example of how an update request may be performed for updating subscription information that is stored in the V-UDR for the subscriber. The subscription information may be, for example, a "remaining allowed usage". Figure 11 further illustrates steps that may be performed when at least some of the subscription information is removed. Subscription information may be removed following expiry of a "reset time" in the visited PLMN. This is discussed further below.

Figure 8 illustrates potential signalling between a visited-SMF (V-SMF) 801, a visited-PCF (V-PCF) 802, a Visited-UDR (V-UDR) 803, a Home-PCF (H-PCF) 804, and a Home-UDR (H-UDR) 805. The V-SMF 801, V-PCF 802 and V-UDR 803 are located in a same VPLMN. The H-PCF 804 and H-UDR are located in the same H-PLMN with which the subscriber associated with the session is associated. This example of Figure 8 relates to inter-PCF signalling.

At 8001, the V-SMF 801 signals a request to the V-PCF 802 to create a policy decision for a particular session. Using current 3GPP terminology, this may be performed using an Npcf_SMPolicyControl_Create request message.

When the V-PCF 802 determines that this request relates to an LBO case and that the V-UDR 803 is likely to comprise a dynamic Session Management Policy Data entry applicable for the PDU Session that this LBO roamer has established, 8002 and 8003 are performed.

At 8002, the V-PCF 802 signals a query to the V-UDR 803. The query may be signalled by invoking an Nudr_DM_Query. This query may comprise at least one of: an identifier for the subscriber (e.g. SUPI), an identifier of the DNN, an identifier of the relevant slice for this session (e.g. S-NSSAI), policy data relating to the session, PDU session policy control data relating to the session, and any remaining allowed usage data.

At 8003, the V-UDR 803 may respond to the query received in 8002 with current data about this roamer. This information may comprise information related to the current remaining allowed usage data.

When the V-PCF 802 determines that the V-UDR 803 is unlikely to comprise a dynamic Session Management Policy Data entry applicable for the PDU Session that this LBO roamer has established or when 8003 does not comprise any information related to the current remaining allowed usage data, 8004 to 8006 are performed.

At 8004, the V-PCF 802 signals a policy decision request to the H-PCF 804. This policy decision request may ask for Session Management Policy Data that applies when the indicated subscriber (indicated by, for example, a SUPI) wants to access the combination of an indicated data network (indicated by, for example, a DNN) and slice information (indicated by, for example, a provided S-NSSAI) from the network of the indicated domain (e.g. the indicated VPLMN). This signal may be, for example, an Npcf_SMPolicyControl_Create request. This signal may instead be signalled using a new operation, labelled herein as Npcf_SMPolicyControl_Get. This policy decision request may be signalled on the N24 interface between V-PCF and H-PCF.

At 8005, the H-PCF 804 signals a query to the H-UDR 805. The query may be signalled by invoking an Nudr_DM_Query. This query may comprise at least one of: an identifier for the subscriber (e.g. SUPI), an identifier of the DNN, an identifier of the relevant slice for this session (e.g. S-NSSAI), policy data relating to the session, PDU session policy control data relating to the session, and any remaining allowed usage data. In addition, the query may comprise an indication of the identity of the VPLMN (i.e. the PLMN within which the V-PCF, V-UDR and V-SMF are located). In other words, the H-PCF 804 attempts to retrieve the Session Management Policy Data (including usage limits) to be applied for the concerned SUPI, VPLMN-ID combination from the H-UDR 805. This usage limit information is per UE and PLMN and is thus a new piece of Policy Data to be defined in the Data Sets exposed by the UDR.

Although not shown, the H-UDR 805 may respond to the query of 8005 with current usage data relating to the session.

At 8006, the H-PCF 804 responds to the signalling of 8004 with Session Management Policy Data. This signalling may therefore be performed using an Npcf_SMPolicyControl_Create response (or via the new message response, such as Npcf_SMPolicyControl_Get response). This signalling may comprise usage limits. For example, this response may comprise usage limits for the subscriber. Alternatively or in addition, this response may comprise a reset time, which is defined herein. The reset time is considered to be a time after which the PLMN that does the monitoring resets the value of the "remaining allowed usage" back to the value of the initial limit. In other words, the reset time indicates a time after which the remaining allowed usage for the PDU Session will be reset to the provided limits. In particular, when the "reset time" for a subscription is reached, the V-PCF may request that the V-UDR delete policy data relating to the subscription. This is discussed further below in relation to Figure 11.

Although not shown in Figure 8, the V-PCF 802 may perform a policy decision as described above in relation to the actions of the PCF described in Figure 6 and/or Figure 7. Further, the V-PCF 802 may respond to the request received in 8001 by responding to the V-SMF with a Npcf_SMPolicyControl_Create response as described above in relation to Figure 6 and/or Figure 7.

Figure 9 illustrates example signalling that may be performed when the VPLMN handles usage limit control without involving the HPLMN.

Figure 9 illustrates potential signalling between a UE 901, a Radio Access Network (RAN) 902, an Access and Mobility Function (AMF) 903, a User Plane Function 904, an SMF 905, a PCF 906, a UDM 907, and a data network (DN) 908. All of the core network entities depicted in Figure 9 form part of the VPLMN bar the UDM 907, which is part of the Home PLMN. In other words, at least the AMF 903, UPF 904, SMF 905, PCF 906, and UDM 907 are entities of the VPLMN.

At 9001, the UE signals a session establishment request to the AMF 903. This may be performed, for example using non access stratum (NAS) signalling. The session establishment request may be a PDU session establishment request.

At 9002, the AMF 903 signals the SMF 905 a request to create a session for the subscriber of the UE 901. Using current 3GPP terminology, this request may be an Nsmf_PDUSession CreateSMContext request.

At 9003, the SMF 905 signals the UDM 907 a request to retrieve subscription information for the subscriber of the UE 901. Using current 3GPP terminology, the subscription information request may be, for example, an Nudm_SDM_Get request. This request may comprise: an identifier for the subscriber (e.g. SUPI), Session Management Subscription data for the session, an identifier of a selected Data Network Name, and slice information for the session (e.g. S-NSSAI), an identifier of the VPLMN, and the Network Identifier (e.g. a DNN). The SMF 905 may further subscribe to changes to this information. This may be performed using Nudm_SDM_Subscribe signalling.

At 9004, the UDM 907 determines usage limit information for the requested session after determining that an LBO situation applies. The usage limit may indicate a size allowance for data used by a subscriber. For example, in an example of 500megabytes, when 500MB of data has been used by a subscriber during a session, then the PCF may be informed about an event. It is understood that the usage limit may be expressed in terms of other values, such as an amount of data used within a predetermined timescale.

At 9005, the UDM 907 responds to the signalling of 9003. Using current 3GPP terminology, this response may be an Nudm_SDM_Get response. Compared to previous instances of this message, this message may be configured to comprise the usage limit information determined at 9004.

At 9006, the SMF 905 signals a request to the PCF 902 to create a policy decision for a particular session. Using current 3GPP terminology, this may be performed using an Npcf_SMPolicyControl_Create request message. However, compared to previous instances of this message, this message may be configured to comprise the usage limit received in 9005.

**At** 9007, the PCF 906 determines a policy decision in response to the signalling of 9006. This determination may be made in dependence on the received usage limit of 9006. The rest of this determination may be performed a policy decision as described above in relation to the actions of the PCF described in Figure 6 and/or Figure 7. The PCF 906 may further perform the actions described below in relation to steps of Figure 11. As an alternative to performing these steps of Figure 11, the PCF 906 may await a first usage report from the SMF 905.

**At** 9008, the PCF 906 may respond to the request received 9006 by responding to the V-SMF with a Npcf_SMPolicyControl_Create response as described above in relation to Figure 6 and/or Figure 7.

Figure 10 illustrates potential signalling between a V-SMF 1001, a V-PCF 1002, and a V-UDR 1003.

At 10001, the V-SMF 1001 signals a request for a policy for a session to the V-PVF 1002. Using current 3GPP terminology, this may be performed using an Npcf_SMPolicyControl_Create request message.

When the V-PCF 802 determines that this request relates to an LBO case and that the V-UDR 803 is likely to comprise a dynamic Session Management Policy Data entry applicable for the PDU Session that this LBO roamer has established, 8002 and 8003 are performed.

At 10002, the V-PCF 1002 signals a query to the V-UDR 803. The query may be signalled by invoking an Nudr_DM_Query. This query may comprise at least one of: an identifier for the subscriber (e.g. SUPI), an identifier of the DNN, an identifier of the relevant slice for this session (e.g. S-NSSAI), policy data relating to the session, PDU session policy control data relating to the session, and any remaining allowed usage data.

At 10003, the V-UDR 1003 may respond to the query received in 10002 with current data about this roamer. This information may comprise information related to the current remaining allowed usage data.

**When** the V-PCF 1002 determines that the signalling of 10003 does not comprise any information related to the current remaining allowed usage data and the V-PCF 1002 determines that there is no agreement for V-PCF to retrieve per User usage limits from the HPLMN of the subscriber, 10004 to 10005 are performed.

At 10004, the V-PCF 1003 signals a query to the V-UDR 1004. This signalled query may be performed by invoking an Nudr_DM_Query request comprising an identifier of the HPLMN, and information related to the PDU session to which the requested policy relates (e.g. the data network name and/or slice information (e.g. the S-NSSAI) of the PDU Session).

**At** 10005, the V-UDR 1004 responds to the query of 10004. This response may comprise usage limits to be applied for the established PDU Session. This response may comprise an identification of the reset time. As mentioned above, the reset time is considered to be a respective time after which the remaining allowed usage for the PDU Session will be reset to the provided limits.

At 10006, the V-PCF 1002 performs a policy decision as described above in relation to the actions of the PCF described in Figure 6 and/or Figure 7.

At 10007, the V-PCF 1002 may respond to the request received in 10001 by responding to the V-SMF with an Npcf_SMPolicyControl_Update response, as described above in relation to Figure 6 and/or Figure 7.

Figure 11 illustrates potential signalling between a V-SMF 1101, a V-PCF 112, and a V-UDR 1103 after the operations of at least one of Figures 8 to 10 have been performed (i.e. after the V-PCF has successfully determined a reset time and/or a remaining usage).

At 11001, the V-PCF 1102 determines that a reset time has expired and signals the V-UDR 1103 responsive to this determination. This signalling is configured so that the V-UDR removes the dynamic entry for a subscriber-PLMN domain combination from the V-UDR 1103 (provided to the V-PCF 1102 as discussed in the above examples of Figures 8 to 10). This signalling may thus comprise an indication of the subscriber (e.g. the SUPI for the subscriber) and at least one of the Data network name and/or the slice identifier for the session. The signalling may comprise an indication that the UDR should delete policy data stored for an indicated combination of a subscriber (e.g. indicated via a provided SUPI in the request), a data network (e.g. indicated via a provided DNN), and slice information for the session (e.g. indicated via a provided S-NSSAI in the request). The signalling may be labelled as Nudr_DM_Delete.

At 11002, the V-SMF 1101 signals a policy control update request to the V-PCF 1102. This update request may be labelled as Npcf_SMPolicyControl_Update. The signalling of 11002 may be performed when a Policy Control Request Trigger condition has been met. This signalling may comprise information about the data usage (e.g. that X amount of data has so far been used during this session) and an indication of a session to which the data usage results.

When the signalling of 11002 comprises a usage report, the V-PCF performs 11003.

At 11003, the V-PCF 1102 determines whether the subscriber-PLMN domain combination provided in 11002 is currently stored in the V-UDR 1103. When the subscriber-PLMN domain combination is not stored in the V-UDR, the request of 11002 relates to a new roamer or for roamers whose previous entries have expired and thus been removed (such as occurred in 11001). When the subscriber-PLMN domain combination is stored in the V-UDR, the request of 11002 relates to an existing roamer. This may be determined by the V-PCF 1102 signalling a query (e.g. an Nudr_DM_Query) to the V-UDR 1103 to this effect and receiving a response.

When the request of 110002 relates to a case in which there is no subscriber-PLMM combination stored at the V-UDR 1103, a "create" request is sent to the V-UDR to cause the V-UDR to store the subscriber-PLMN combination of 11002 at the V-UDR 1103. The create request may comprise an identifier of the subscriber (e.g. a SUPO), an indication of a DNN, an indication of a slice identification (e.g. an S-NSSAI), policy data, an indication of remaining allowed usage data, and/or any data received at session establishment. Usage limits received at SM Policy Association establishment may be used as initial values of the "remaining allowed usage" (for all possible usage limit metrics, e.g., time-based or data-based).

At 11004, the V-PCF 1102 performs an update procedure to update information currently in the V-UDR 1103 about this subscriber-PLMN combination. This update procedure is performed to subtract the usage received in the usage report of 11002 from the "remaining allowed usage".

At 11005, the V-PCF 1102 makes a policy decision.

At 11006, the V-PCF 1102 signals the policy decision determined at 11005 to the V-SMF 1101.

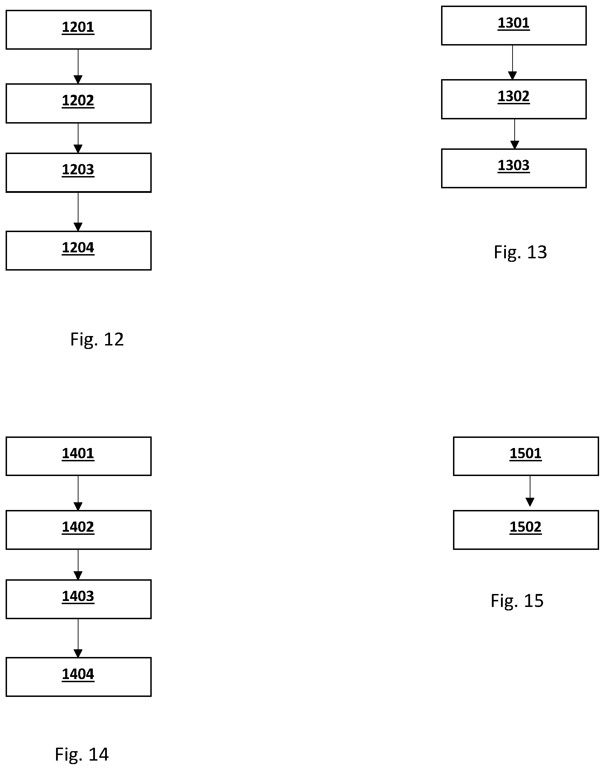

Figures 12 to 15 are flow charts illustrating certain features of the examples described above. It is therefore understood that the following described features may be combined with more specific features described in the examples discussed above.

Figure 12 illustrates operations that may be performed by an apparatus for a first policy control function. The first policy control function may be configured to operate in a first domain. The first domain may be a visited domain to a roaming subscriber. In such a case, the first policy control function may be a VPCF.

At 1201, the apparatus receives, from a session management function, a request for a policy to be established for a session for a subscriber (e.g. the roaming subscriber), wherein the subscriber is subscribed in a second domain (e.g. the home domain of the subscriber) and the first policy control function is configured to operate in a first domain (e.g. the visited domain).

At 1202, the apparatus determines a policy for the requested session, the determined policy comprising an indication of an allowed usage for the subscriber and at least one trigger condition for the policy to be updated. As an example, the user may have an allowed usage of XMB per day while connected to the second domain. In this example, there is an allowed usage of XMB and a reset time of one day (e.g. every day, the "remaining allowed usage" will be reset to XMB, although it may decrease during use during the day).

At 1203, the apparatus signals the at least one trigger condition to the session management function.

At 1204, the apparatus monitors the allowed usage for the subscriber by updating the policy in response to receipt of an indication that the at least one trigger condition has been met. This may comprise updating the "remaining allowed usage", as per the example above.

The determining a policy may comprise signalling, to a second policy control function that operates in the second domain, a request for the allowed usage, the request comprising an identification of the subscriber and an identification of the data connectivity being requested. The identification of the data connectivity being requested may comprise a DNN and slice identification information for the session (e.g. S-NSSAI). The apparatus may receive the allowed usage from the second policy control function.

The apparatus may signal, to a data repository function configured to operate in the first domain, a request for the allowed usage. The apparatus may receive an indication from the data repository function that the allowed usage is not available at the data repository. In such a case, the signalling to the second policy control function, a request for the allowed usage may be performed in response to the received indication from the data repository function.

**The** determining a policy may comprise signalling, to a data repository function that operates in the first domain, a request for a remaining amount of the allowed usage, the request comprising an identification of the subscriber. The apparatus may receive an indication of the allowed usage from the data repository function.

The request for a policy for a session to be established for a subscriber may comprise the indication of the allowed usage.

The monitoring may comprise receiving, from the session management function, an indication that the at least one trigger condition has been met; and signalling, to a data repository function configured to operate in the same domain as the first policy control function, a request to update a usage information for the subscriber that is stored by the data repository function.

The monitoring may comprise, in response to receiving said indication that the at least one trigger condition has been met, retrieving information identifying a quantity of the allowed usage that is remaining following the trigger condition being met, wherein said signalling the request to update the policy comprises a request to update the allowed usage. As an example, the request may be a request to update the allowed usage to equal said quantity.

Figure 13 is a flowchart illustrating operations that may be performed by an apparatus for a data repository function configured to operate in the first domain. The data repository function may be a UDR. The apparatus of Figure 13 may interact with the apparatus of Figure 12.

At 1301, the apparatus stores subscription information for a subscriber, wherein the subscriber is subscribed in a different domain to the domain in which the data repository function is configured to operate, the subscription information comprising a value for an allowed usage for the subscriber.

At 1302, the apparatus receives, from a first policy control function configured to operate in the first domain, a request to update the value for the allowed usage to another value. The first policy control function may be the first policy control function of Figure 12.

At 1303, the apparatus updates the stored subscription information by changing the value for the allowed usage to the another value. The another value may be a remaining allowed usage. The remaining allowed usage may be as discussed in the above examples.

The apparatus may receive, from the first policy control function, a request for at least one of the value and the another value. In response to this request, the apparatus may provide the requested value to the first policy control function.

Figure 14 is a flow chart illustrating operations that may be performed by an apparatus for a session management function. The session management function may be configured to operate in the first domain.

At 1401, the apparatus may signal, to a data management function configured to operate in a second domain, a request for subscription information for a subscriber, wherein the subscriber is subscribed in the second domain and the session management function are configured to operate in a first domain.

At 1402, the apparatus receives, from the data management function, an allowed usage for the subscriber.

At 1403, the apparatus signals a request for a policy for a session for the subscriber to a first policy control function configured to operate in the same domain as the session management function, the request comprising the allowed usage. The first policy control function may be the first policy control function of Figure 12.

At 1404, the apparatus receives said policy from the first policy control function.

Figure 15 is a flow chart illustrating potential operations that may be performed by an apparatus for a data management function configured to operate in a second domain.

At 1501, the apparatus receives, from a session management function configured to operate in the first domain, a request for subscription information for a subscriber subscribed in the second domain. The session management function may be the apparatus of Figure 14.

At 1502, the apparatus signals the stored subscription information to the session management function, the stored subscription information comprising an indication of an allowed usage for the subscriber.

In all of the above examples of Figures 12 to 15, the first domain may be a visited domain, and the second domain is a home domain for the subscriber.

Contrary to a 5G equivalent of the S9-based solution of 4G discussed above, the presently described mechanisms enable the monitoring-based triggering of policies that are determined by the VPLMN. This supports the use case of protecting the VPLMN network from overload caused by roamers. Further, use of the proposed mechanisms can lead to faster and simpler reactions upon the reaching of usage limits because the VPLMN can react without requiring to contact the HPLMN. With regard to the examples discussed above, it is understood that they be combined.

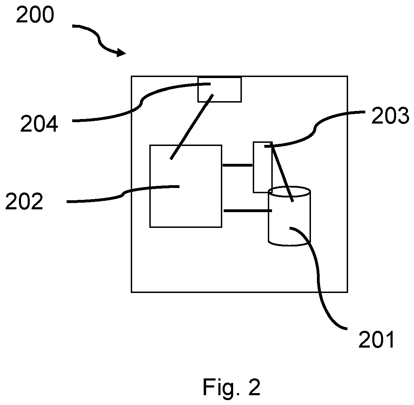

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR etc. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example the control apparatus 200 or processor 201 can be configured to execute an appropriate software code to provide the control functions.

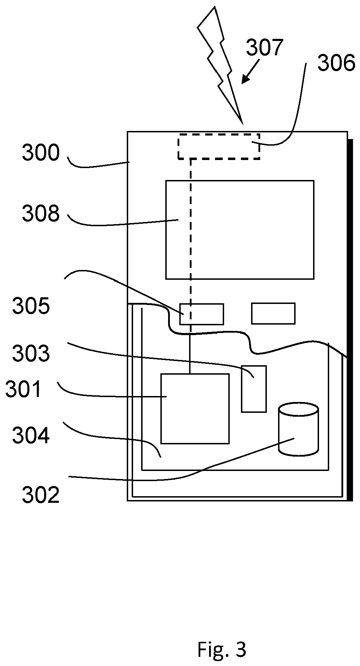

**A** possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 704. The user may control the operation of the wireless device by means of a suitable user interface such as key pad 305, voice commands, touch sensitive screen or pad, combinations thereof or the like. A display 308, a speaker and a microphone can be also provided. Furthermore, a wireless communication device may comprise appropriate connectors (either wired or wireless) to other devices and/or for connecting external accessories, for example hands-free equipment, thereto.

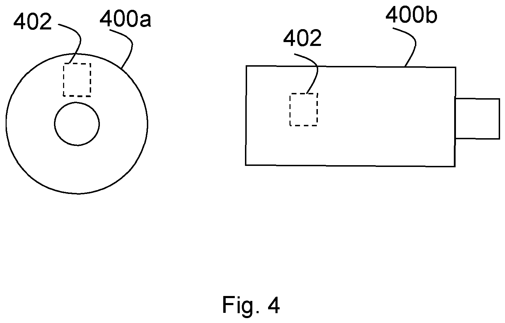

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 12 and/or Figure 13, and/or Figure 14, and/or Figure 15.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 12 and/or Figure 13, and/or Figure 14, and/or Figure 15, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

In the above, different examples are described using, as an example of an access architecture to which the presently described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

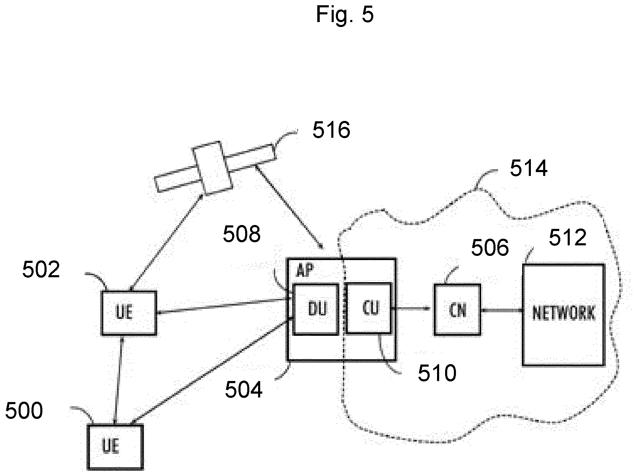

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

The examples are not, however, restricted to the system given as an example but a person skilled in the art may apply the solution to other communication systems provided with necessary properties.

The example of Figure 5 shows a part of an exemplifying radio access network. For example, the radio access network may support sidelink communications described below in more detail.

Figure 5 shows devices 500 and 502. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

The device typically refers to a mobile or static device (e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local breakout (LBO) and multi-access edge computing (MEC).

5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VoIP network, or the Internet, or a private network, or utilize services provided by them. The communication network may also be able to support the usage of cloud services, for example at least part of core network operations may be carried out as a cloud service (this is depicted in Figure 5 by "cloud" 514). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and non-real time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 5). A HNB Gateway (HNB-GW), which is typically installed within an operator's network may aggregate traffic from a large number of HNBs back to a core network.

## Claims

1. An apparatus for a first policy control function, the apparatus comprising means for:
receiving (1201), from a session management function, a request for a policy to be established for a session for a subscriber, wherein the subscriber is subscribed in a second domain and the first policy control function is configured to operate in a first domain;
determining (1202) a policy for the requested session, the determined policy comprising an indication of an allowed usage for the subscriber and at least one trigger condition for the policy to be updated;
signalling (1203) the at least one trigger condition to the session management function; and
monitoring (1204) the allowed usage for the subscriber by updating the policy in response to receipt of an indication that the at least one trigger condition has been met, wherein the first domain is a visited domain, and the second domain is a home domain for the subscriber.

2. An apparatus as claimed in claim 1, wherein the means for determining a policy comprises means for:
signalling, to a second policy control function that operates in the second domain, a request for the allowed usage, the request comprising an identification of the subscriber and an identification of a data connectivity being requested; and
receiving the allowed usage from the second policy control function.

3. An apparatus as claimed in claim 2, the apparatus comprising means for:
signalling, to a data repository function configured to operate in the first domain, a request for the allowed usage; and
receiving an indication from the data repository function that the allowed usage is not available at the data repository;
wherein said signalling to the second policy control function is performed in response to the received indication from the data repository function.

4. An apparatus as claimed in any of claims 2 to 3, wherein the identification of the data connectivity being requested comprises an indication of a data network name and an indication of slice information associated with the session being provided.

5. An apparatus as claimed in claim 1, wherein the means for determining a policy comprises means for:
signalling, to a data repository function that operates in the first domain, a request for a remaining amount of the allowed usage, the request comprising an identification of the subscriber; and
receiving an indication of the allowed usage from the data repository function.

6. An apparatus as claimed in claim 1, wherein the request for a policy for a session to be established for a subscriber comprises the indication of the allowed usage.

7. An apparatus as claimed in any preceding claim, wherein said means for monitoring comprising means for:
receiving, from the session management function, an indication that the at least one trigger condition has been met; and
signalling, to a data repository function configured to operate in the same domain as the first policy control function, a request to update a usage information for the subscriber that is stored by the data repository function.

8. An apparatus as claimed in claim 7, wherein said means for monitoring comprises means for:
in response to receiving said indication that the at least one trigger condition has been met, retrieving information identifying a quantity of the allowed usage that is remaining following the trigger condition being met,
wherein said signalling the request to update the policy comprises a request to update the allowed usage.

9. An apparatus for a data repository function configured to operate in a first domain, the apparatus comprising means for:
storing (1301) subscription information for a subscriber, wherein the subscriber is subscribed in a second domain, the subscription information comprising a value for an allowed usage for the subscriber;
receiving (1302), from a first policy control function configured to operate in the first domain, a request to update the value for the allowed usage to another value; and
updating (1303) the stored subscription information by changing the value for the allowed usage to the another value, wherein the first domain is a visited domain, and the second domain is a home domain for the subscriber.

10. An apparatus as claimed in claim 9, the apparatus comprising means for:
receiving, from the first policy control function, a request for at least one of the value and the another value; and
providing the requested value to the first policy control function.

11. An apparatus for a session management function, the apparatus comprising means for:
signalling (1401), to a data management function configured to operate in a second domain, a request for subscription information for a subscriber, wherein the subscriber is subscribed in the second domain and the session management function is configured to operate in a first domain;
receiving (1402), from the data management function, an allowed usage for the subscriber;
signalling (1403) a request for a policy for a session for the subscriber to a first policy control function configured to operate in the same domain as the session management function, the request comprising the allowed usage; and
receiving (1404) said policy from the first policy control function, wherein the first domain is a visited domain, and the second domain is a home domain for the subscriber.

12. An apparatus for a data management function configured to operate in a second domain, the apparatus comprising means for:
receiving (1501), from a session management function configured to operate in a first domain, a request for subscription information for a subscriber subscribed in the second domain; and
signalling (1502) the stored subscription information to the session management function, the stored subscription information comprising an indication of an allowed usage for the subscriber, wherein the first domain is a visited domain, and the second domain is a home domain for the subscriber.

13. A method for an apparatus for a first policy control function, the method comprising:
receiving (1201), from a session management function, a request for a policy to be established for a session for a subscriber, wherein the subscriber is subscribed in a second domain and the first policy control function is configured to operate in a first domain;
determining (1202) a policy for the requested session, the determined policy comprising an indication of an allowed usage for the subscriber and at least one trigger condition for the policy to be updated;
signalling (1203) the at least one trigger condition to the session management function; and
monitoring (1204) the allowed usage for the subscriber by updating the policy in response to receipt of an indication that the at least one trigger condition has been met, wherein the first domain is a visited domain, and the second domain is a home domain for the subscriber.

14. A method for an apparatus for a data repository function configured to operate in a first domain, the method comprising:
storing (1301) subscription information for a subscriber, wherein the subscriber is subscribed in a second domain, the subscription information comprising a value for an allowed usage for the subscriber;
receiving (1302), from a first policy control function configured to operate in the first domain, a request to update the value for the allowed usage to another value; and
updating (1303) the stored subscription information by changing the value for the allowed usage to the another value, wherein the first domain is a visited domain, and the second domain is a home domain for the subscriber.

15. A method for an apparatus for a session management function, the method comprising:
signalling (1401), to a data management function configured to operate in a second domain, a request for subscription information for a subscriber, wherein the subscriber is subscribed in the second domain and the session management function is configured to operate in a first domain;
receiving (1402), from the data management function, an allowed usage for the subscriber;
signalling (1403) a request for a policy for a session for the subscriber to a first policy control function configured to operate in the same domain as the session management function, the request comprising the allowed usage; and
receiving (1404) said policy from the first policy control function, wherein the first domain is a visited domain, and the second domain is a home domain for the subscriber.

16. A method for an apparatus for a data management function configured to operate in a second domain, the method comprising:
receiving (1501), from a session management function configured to operate in a first domain, a request for subscription information for a subscriber subscribed in the second domain; and
signalling (1502) the stored subscription information to the session management function, the stored subscription information comprising an indication of an allowed usage for the subscriber, wherein the first domain is a visited domain, and the second domain is a home domain for the subscriber.

17. A computer program product that, when run on an apparatus for a first policy control function, causes the apparatus to perform:
receiving (1201), from a session management function, a request for a policy to be established for a session for a subscriber, wherein the subscriber is subscribed in a second domain and the first policy control function is configured to operate in a first domain;
determining (1202) a policy for the requested session, the determined policy comprising an indication of an allowed usage for the subscriber and at least one trigger condition for the policy to be updated;
signalling (1203) the at least one trigger condition to the session management function; and
monitoring (1204) the allowed usage for the subscriber by updating the policy in response to receipt of an indication that the at least one trigger condition has been met, wherein the first domain is a visited domain, and the second domain is a home domain for the subscriber.

18. A computer program product that, when run on an apparatus for a data repository function configured to operate in a first domain, causes the apparatus to perform:
storing (1301) subscription information for a subscriber, wherein the subscriber is subscribed in a second domain, the subscription information comprising a value for an allowed usage for the subscriber;
receiving (1302), from a first policy control function configured to operate in the first domain, a request to update the value for the allowed usage to another value; and
updating (1303) the stored subscription information by changing the value for the allowed usage to the another value, wherein the first domain is a visited domain, and the second domain is a home domain for the subscriber.

19. A computer program product that, when run on an apparatus for a session management function, causes the apparatus to perform:
signalling (1401), to a data management function configured to operate in a second domain, a request for subscription information for a subscriber, wherein the subscriber is subscribed in the second domain and the session management function is configured to operate in a first domain;
receiving (1402), from the data management function, an allowed usage for the subscriber;
signalling (1403) a request for a policy for a session for the subscriber to a first policy control function configured to operate in the same domain as the session management function, the request comprising the allowed usage; and
receiving (1404) said policy from the first policy control function, wherein the first domain is a visited domain, and the second domain is a home domain for the subscriber.

20. A computer program product that, when run on an apparatus for a data management function configured to operate in a second domain, causes the apparatus to perform:
receiving (1501), from a session management function configured to operate in a first domain, a request for subscription information for a subscriber subscribed in the second domain; and
signalling (1502) the stored subscription information to the session management function, the stored subscription information comprising an indication of an allowed usage for the subscriber, wherein the first domain is a visited domain, and the second domain is a home domain for the subscriber.

## Patentansprüche

1. Vorrichtung für eine erste Richtliniensteuerfunktion, wobei die Vorrichtung Mittel für Folgendes umfasst:
Empfangen (1201) einer Anforderung einer Richtlinie, die für eine Sitzung für einen Subskribenten einzurichten ist, von einer Sitzungsverwaltungsfunktion, wobei der Subskribent eine Subskription in einer zweiten Domäne aufweist und die erste Richtliniensteuerfunktion zum Betrieb in einer ersten Domäne ausgelegt ist;
Bestimmen (1202) einer Richtlinie für die angeforderte Sitzung, wobei die bestimmte Richtlinien eine Anzeige einer zugelassenen Nutzung für den Subskribenten und mindestens eine Auslösebedingung für die zu aktualisierende Richtlinie umfasst;
Signalisieren (1203) der mindestens einen Auslösebedingung an die Sitzungsverwaltungsfunktion und
Überwachen (1204) der zugelassenen Nutzung für den Subskribenten durch Aktualisieren der Richtlinie in Reaktion auf den Empfang einer Anzeige, dass die mindestens eine Auslösebedingung erfüllt wurde, wobei die erste Domäne eine besuchte Domäne ist und die zweite Domäne eine Heimdomäne für den Subskribenten ist.

2. Vorrichtung nach Anspruch 1, wobei die Mittel zum Bestimmen einer Richtlinie Mittel für Folgendes umfassen:
Signalisieren einer Anforderung der zugelassenen Nutzung an eine zweite Richtliniensteuerfunktion, die in der zweiten Domäne betrieben wird, wobei die Anforderung eine Identifikation des Subskribenten und eine Anzeige einer angeforderten Datenkonnektivität umfasst; und
Empfangen der zugelassenen Nutzung von der zweiten Richtliniensteuerfunktion.

3. Vorrichtung nach Anspruch 2, wobei die Vorrichtung Mittel für Folgendes umfasst:
Signalisieren einer Anforderung der zugelassenen Nutzung an eine Datenrepositoriumsfunktion, die dazu ausgelegt ist, in der ersten Domäne betrieben zu werden; und
Empfangen einer Anzeige von der Datenrepositoriumsfunktion, dass die zugelassene Nutzung im Datenrepositorium nicht verfügbar ist;
wobei die Signalisierung an die zweite Richtliniensteuerfunktion in Reaktion auf die empfangene Anzeige von der Datenrepositoriumsfunktion durchgeführt wird.

4. Vorrichtung nach einem der Ansprüche 2 bis 3, wobei die Identifikation der Datenkonnektivität, die angefordert wird, eine Anzeige eines Datennetzwerknamens und eine Anzeige von Sliceinformationen umfasst, die mit der Sitzung, die bereitgestellt wird, verknüpft sind.

5. Vorrichtung nach Anspruch 1, wobei die Mittel zum Bestimmen einer Richtlinie Mittel für Folgendes umfassen:
Signalisieren einer Anforderung einer verbleibenden Menge der zugelassenen Nutzung an eine Datenrepositoriumsfunktion, die in der ersten Domäne betrieben wird, wobei die Anforderung eine Identifikation des Subskribenten umfasst; und
Empfangen einer Anzeige der zugelassenen Nutzung von der Datenrepositoriumsfunktion.

6. Vorrichtung nach Anspruch 1, wobei die Anforderung einer Richtlinie für eine Sitzung, die für einen Subskribenten einzurichten ist, die Anzeige der zugelassenen Nutzung umfasst.

7. Vorrichtung nach einem der vorhergehenden Ansprüche, wobei die Mittel zum Überwachen Mittel für Folgendes umfassen:
Empfangen einer Anzeige von der Sitzungsverwaltungsfunktion, dass mindestens eine Auslösebedingung erfüllt wurde; und
Signalisieren einer Anforderung zur Aktualisierung von Nutzungsinformationen für den Subskribenten, die von der Datenrepositoriumsfunktion gespeichert werden, an die Datenrepositoriumsfunktion, die dazu ausgelegt ist, in derselben Domäne betrieben zu werden wie die erste Richtliniensteuerfunktion.

8. Vorrichtung nach Anspruch 7, wobei die Mittel zum Überwachen Mittel für Folgendes umfassen:
in Reaktion auf das Empfangen der Anzeige, dass die mindestens eine Auslösebedingung erfüllt wurde, Abrufen von Informationen, die eine Quantität der zugelassenen Nutzung identifizieren, die verbleibt, nachdem die Auslösebedingung erfüllt wurde,
wobei das Signalisieren der Anforderung zur Aktualisierung der Richtlinie eine Anforderung zur Aktualisierung der zugelassenen Nutzung umfasst.

9. Vorrichtung für eine Datenrepositoriumsfunktion, die dazu ausgelegt ist, in einer ersten Domäne betrieben zu werden, wobei die Vorrichtung Mittel für Folgendes umfasst:
Speichern (1301) von Subskriptionsinformationen für einen Subskribenten, wobei der Subskribent in einer zweiten Domäne eine Subskription aufweist, wobei die Subskriptionsinformationen einen Wert für eine zugelassene Nutzung für den Subskribenten umfassen;
Empfangen (1302) einer Anforderung zur Aktualisierung des Wertes für die zugelassene Nutzung von einer ersten Richtliniensteuerfunktion, die dazu ausgelegt ist, in der ersten Domäne betrieben zu werden, auf einen anderen Wert und
Aktualisieren (1303) der gespeicherten Subskriptionsinformationen durch Ändern des Wertes für die zugelassene Nutzung in einen anderen Wert, wobei die erste Domäne eine besuchte Domäne ist und die zweite Domäne eine Heimdomäne für den Subskribenten ist.

10. Vorrichtung nach Anspruch 9, wobei die Vorrichtung Mittel für Folgendes umfasst:
Empfangen einer Anforderung von mindestens einem des Wertes und des anderen Wertes von der ersten Richtliniensteuerfunktion und
Bereitstellen des angeforderten Wertes für die erste Richtliniensteuerfunktion.

11. Vorrichtung für eine Sitzungsverwaltungsfunktion, wobei die Vorrichtung Mittel für Folgendes umfasst:
Signalisieren (1401) einer Anforderung von Subskriptionsinformationen für einen Subskribenten an eine Datenverwaltungsfunktion, die dazu ausgelegt ist, in einer zweiten Domäne betrieben zu werden, wobei der Subskribent in der zweiten Domäne eine Subskription aufweist und die Sitzungsverwaltungsfunktion dazu ausgelegt ist, in einer ersten Domäne betrieben zu werden;
Empfangen (1402) einer zugelassenen Nutzung für den Subskribenten von der Datenverwaltungsfunktion;
Signalisieren (1403) einer Anforderung einer Richtlinie für eine Sitzung für den Subskribenten an eine erste Richtliniensteuerfunktion, die dazu ausgelegt ist, in derselben Domäne betrieben zu werden wie die Sitzungsverwaltungsfunktion, wobei die Anforderung die zugelassene Nutzung umfasst; und
Empfangen (1404) der Richtlinie von der ersten Richtliniensteuerfunktion, wobei die erste Domäne eine besuchte Domäne ist und die zweite Domäne eine Heimdomäne für den Subskribenten ist.

12. Vorrichtung für eine Datenverwaltungsfunktion, die dazu ausgelegt ist, in einer zweiten Domäne betrieben zu werden, wobei die Vorrichtung Mittel für Folgendes umfasst:
Empfangen (1501) einer Anforderung von Subskriptionsinformationen für einen Subskribenten, der in der zweiten Domäne eine Subskription aufweist, von einer Sitzungsverwaltungsfunktion, die dazu ausgelegt ist, in einer ersten Domäne betrieben zu werden; und
Signalisieren (1502) der gespeicherten Subskriptionsinformationen an die Sitzungsverwaltungsfunktion, wobei die gespeicherten Subskriptionsinformationen eine Anzeige einer zugelassenen Nutzung für den Subskribenten umfassen, wobei die erste Domäne eine besuchte Domäne ist und die zweite Domäne eine Heimdomäne für den Subskribenten ist.

13. Verfahren für eine Vorrichtung für eine erste Richtliniensteuerfunktion, wobei das Verfahren Folgendes umfasst:
Empfangen (1201) einer Anforderung einer Richtlinie, die für eine Sitzung für einen Subskribenten einzurichten ist, von einer Sitzungsverwaltungsfunktion, wobei der Subskribent eine Subskription in einer zweiten Domäne aufweist und die erste Richtliniensteuerfunktion zum Betrieb in einer ersten Domäne ausgelegt ist;
Bestimmen (1202) einer Richtlinie für die angeforderte Sitzung, wobei die bestimmte Richtlinien eine Anzeige einer zugelassenen Nutzung für den Subskribenten und mindestens eine Auslösebedingung für die zu aktualisierende Richtlinie umfasst;
Signalisieren (1203) der mindestens einen Auslösebedingung an die Sitzungsverwaltungsfunktion und
Überwachen (1204) der zugelassenen Nutzung für den Subskribenten durch Aktualisieren der Richtlinie in Reaktion auf den Empfang einer Anzeige, dass die mindestens eine Auslösebedingung erfüllt wurde, wobei die erste Domäne eine besuchte Domäne ist und die zweite Domäne eine Heimdomäne für den Subskribenten ist.

14. Verfahren für eine Vorrichtung für eine Datenrepositoriumsfunktion, die dazu ausgelegt ist, in einer ersten Domäne betrieben zu werden, wobei das Verfahren Folgendes umfasst:
Speichern (1301) von Subskriptionsinformationen für einen Subskribenten, wobei der Subskribent in einer zweiten Domäne eine Subskription aufweist, wobei die Subskriptionsinformationen einen Wert für eine zugelassene Nutzung für den Subskribenten umfassen;
Empfangen (1302) einer Anforderung zur Aktualisierung des Wertes für die zugelassene Nutzung von einer ersten Richtliniensteuerfunktion, die dazu ausgelegt ist, in der ersten Domäne betrieben zu werden, auf einen anderen Wert und
Aktualisieren (1303) der gespeicherten Subskriptionsinformationen durch Ändern des Wertes für die zugelassene Nutzung in einen anderen Wert, wobei die erste Domäne eine besuchte Domäne ist und die zweite Domäne eine Heimdomäne für den Subskribenten ist.

15. Verfahren für eine Vorrichtung für eine Sitzungsverwaltungsfunktion, wobei das Verfahren Folgendes umfasst:
Signalisieren (1401) einer Anforderung von Subskriptionsinformationen für einen Subskribenten an eine Datenverwaltungsfunktion, die dazu ausgelegt ist, in einer zweiten Domäne betrieben zu werden, wobei der Subskribent in der zweiten Domäne eine Subskription aufweist und die Sitzungsverwaltungsfunktion dazu ausgelegt ist, in einer ersten Domäne betrieben zu werden;
Empfangen (1402) einer zugelassenen Nutzung für den Subskribenten von der Datenverwaltungsfunktion;
Signalisieren (1403) einer Anforderung einer Richtlinie für eine Sitzung für den Subskribenten an eine erste Richtliniensteuerfunktion, die dazu ausgelegt ist, in derselben Domäne betrieben zu werden wie die Sitzungsverwaltungsfunktion, wobei die Anforderung die zugelassene Nutzung umfasst; und
Empfangen (1404) der Richtlinie von der ersten Richtliniensteuerfunktion, wobei die erste Domäne eine besuchte Domäne ist und die zweite Domäne eine Heimdomäne für den Subskribenten ist.

16. Verfahren für eine Vorrichtung für eine Datenverwaltungsfunktion, die dazu ausgelegt ist, in einer zweiten Domäne betrieben zu werden, wobei das Verfahren Folgendes umfasst:
Empfangen (1501) einer Anforderung von Subskriptionsinformationen für einen Subskribenten, der in der zweiten Domäne eine Subskription aufweist, von einer Sitzungsverwaltungsfunktion, die dazu ausgelegt ist, in einer ersten Domäne betrieben zu werden; und
Signalisieren (1502) der gespeicherten Subskriptionsinformationen an die Sitzungsverwaltungsfunktion, wobei die gespeicherten Subskriptionsinformationen eine Anzeige einer zugelassenen Nutzung für den Subskribenten umfassen, wobei die erste Domäne eine besuchte Domäne ist und die zweite Domäne eine Heimdomäne für den Subskribenten ist.

17. Computerprogrammprodukt, das, wenn es auf einer Vorrichtung für eine erste Richtliniensteuerfunktion ausgeführt wird, die Vorrichtung zum Durchführen von Folgendem veranlasst wird:
Empfangen (1201) einer Anforderung einer Richtlinie, die für eine Sitzung für einen Subskribenten einzurichten ist, von einer Sitzungsverwaltungsfunktion, wobei der Subskribent eine Subskription in einer zweiten Domäne aufweist und die erste Richtliniensteuerfunktion zum Betrieb in einer ersten Domäne ausgelegt ist;
Bestimmen (1202) einer Richtlinie für die angeforderte Sitzung, wobei die bestimmte Richtlinien eine Anzeige einer zugelassenen Nutzung für den Subskribenten und mindestens eine Auslösebedingung für die zu aktualisierende Richtlinie umfasst;
Signalisieren (1203) der mindestens einen Auslösebedingung an die Sitzungsverwaltungsfunktion und
Überwachen (1204) der zugelassenen Nutzung für den Subskribenten durch Aktualisieren der Richtlinie in Reaktion auf den Empfang einer Anzeige, dass die mindestens eine Auslösebedingung erfüllt wurde, wobei die erste Domäne eine besuchte Domäne ist und die zweite Domäne eine Heimdomäne für den Subskribenten ist.

18. Computerprogrammprodukt, das, wenn es auf einer Vorrichtung für eine Datenrepositoriumsfunktion, die dazu ausgelegt ist, in einer ersten Domäne betrieben zu werden, ausgeführt wird, die Vorrichtung zum Durchführen von Folgendem veranlasst wird:
Speichern (1301) von Subskriptionsinformationen für einen Subskribenten, wobei der Subskribent in einer zweiten Domäne eine Subskription aufweist, wobei die Subskriptionsinformationen einen Wert für eine zugelassene Nutzung für den Subskribenten umfassen;
Empfangen (1302) einer Anforderung zur Aktualisierung des Wertes für die zugelassene Nutzung von einer ersten Richtliniensteuerfunktion, die dazu ausgelegt ist, in der ersten Domäne betrieben zu werden, auf einen anderen Wert und
Aktualisieren (1303) der gespeicherten Subskriptionsinformationen durch Ändern des Wertes für die zugelassene Nutzung in einen anderen Wert, wobei die erste Domäne eine besuchte Domäne ist und die zweite Domäne eine Heimdomäne für den Subskribenten ist.

19. Computerprogrammprodukt, das, wenn es auf einer Vorrichtung für eine Sitzungsverwaltungsfunktion ausgeführt wird, die Vorrichtung zum Durchführen von Folgendem veranlasst wird:
Signalisieren (1401) einer Anforderung von Subskriptionsinformationen für einen Subskribenten an eine Datenverwaltungsfunktion, die dazu ausgelegt ist, in einer zweiten Domäne betrieben zu werden, wobei der Subskribent in der zweiten Domäne eine Subskription aufweist und die Sitzungsverwaltungsfunktion dazu ausgelegt ist, in einer ersten Domäne betrieben zu werden;
Empfangen (1402) einer zugelassenen Nutzung für den Subskribenten von der Datenverwaltungsfunktion;
Signalisieren (1403) einer Anforderung einer Richtlinie für eine Sitzung für den Subskribenten an eine erste Richtliniensteuerfunktion, die dazu ausgelegt ist, in derselben Domäne betrieben zu werden wie die Sitzungsverwaltungsfunktion, wobei die Anforderung die zugelassene Nutzung umfasst; und
Empfangen (1404) der Richtlinie von der ersten Richtliniensteuerfunktion, wobei die erste Domäne eine besuchte Domäne ist und die zweite Domäne eine Heimdomäne für den Subskribenten ist.

20. Computerprogrammprodukt, das, wenn es auf einer Vorrichtung für eine Datenverwaltungsfunktion, die dazu ausgelegt ist, in einer zweiten Domäne betrieben zu werden, ausgeführt wird, die Vorrichtung zum Durchführen von Folgendem veranlasst wird:
Empfangen (1501) einer Anforderung von Subskriptionsinformationen für einen Subskribenten, der in der zweiten Domäne eine Subskription aufweist, von einer Sitzungsverwaltungsfunktion, die dazu ausgelegt ist, in einer ersten Domäne betrieben zu werden; und
Signalisieren (1502) der gespeicherten Subskriptionsinformationen an die Sitzungsverwaltungsfunktion, wobei die gespeicherten Subskriptionsinformationen eine Anzeige einer zugelassenen Nutzung für den Subskribenten umfassen, wobei die erste Domäne eine besuchte Domäne ist und die zweite Domäne eine Heimdomäne für den Subskribenten ist.

## Revendications

1. Appareil destiné à une première fonction de contrôle de politique, l'appareil comprenant des moyens pour :
recevoir (1201), d'une fonction de gestion de session, une demande d'une politique à établir pour une session pour un abonné, dans lequel l'abonné est souscrit dans un deuxième domaine et la première fonction de contrôle de politique est configurée pour fonctionner dans un premier domaine ;
déterminer (1202) une politique pour la session demandée, la politique déterminée comprenant une indication d'une utilisation autorisée pour l'abonné et au moins une condition de déclenchement pour la politique à mettre à jour ;
signaler (1203) l'au moins une condition de déclenchement à la fonction de gestion de session ; et
surveiller (1204) l'utilisation autorisée pour l'abonné en mettant à jour la politique en réponse à la réception d'une indication selon laquelle l'au moins une condition de déclenchement a été remplie, dans lequel le premier domaine est un domaine visité, et le deuxième domaine est un domaine domestique pour l'abonné.

2. Appareil selon la revendication 1, dans lequel les moyens de détermination d'une politique comprennent des moyens pour :
signaler, à une deuxième fonction de contrôle de politique qui fonctionne dans le deuxième domaine, une demande de l'utilisation autorisée, la demande comprenant une identification de l'abonné et une identification d'une connectivité de données demandée ; et
recevoir l'utilisation autorisée de la deuxième fonction de contrôle de politique.

3. Appareil selon la revendication 2, l'appareil comprenant des moyens pour :
signaler, à une fonction de référentiel de données configurée pour fonctionner dans le premier domaine, une demande de l'utilisation autorisée ; et
recevoir une indication de la fonction de référentiel de données selon laquelle l'utilisation autorisée n'est pas disponible dans le référentiel de données ;
dans lequel ladite signalisation à la deuxième fonction de contrôle de politique est effectuée en réponse à l'indication reçue de la fonction de référentiel de données.

4. Appareil selon l'une des revendications 2 et 3, dans lequel l'identification de la connectivité de données demandée comprend une indication d'un nom de réseau de données et une indication d'informations de tranches associées à la session fournie.

5. Appareil selon la revendication 1, dans lequel les moyens de détermination d'une politique comprennent des moyens pour :
signaler, à une fonction de référentiel de données qui fonctionne dans le premier domaine, une demande d'une quantité restante de l'utilisation autorisée, la demande comprenant une identification de l'abonné ; et
recevoir une indication de l'utilisation autorisée de la fonction de référentiel de données.

6. Appareil selon la revendication 1, dans lequel la demande d'une politique pour une session à établir pour un abonné comprend l'indication de l'utilisation autorisée.

7. Appareil selon l'une des revendications précédentes, dans lequel lesdits moyens de surveillance comprennent des moyens pour :
recevoir, de la fonction de gestion de session, une indication selon laquelle l'au moins une condition de déclenchement a été remplie ; et
signaler, à une fonction de référentiel de données configurée pour fonctionner dans le même domaine que la première fonction de contrôle de politique, une demande de mise à jour d'informations d'utilisation pour l'abonné qui sont stockées par la fonction de référentiel de données.

8. Appareil selon la revendication 7, dans lequel lesdits moyens de surveillance comprennent des moyens pour :
en réponse à la réception de ladite indication selon laquelle l'au moins une condition de déclenchement a été remplie, récupérer des informations identifiant une quantité de l'utilisation autorisée qui reste après que la condition de déclenchement a été remplie,
dans lequel ladite signalisation de la demande de mise à jour de la politique comprend une demande de mise à jour de l'utilisation autorisée.

9. Appareil pour une fonction de référentiel de données configurée pour fonctionner dans un premier domaine, l'appareil comprenant des moyens pour :
stocker (1301) des informations d'abonnement pour un abonné, dans lequel l'abonné est souscrit dans un deuxième domaine, les informations d'abonnement comprenant une valeur d'une utilisation autorisée pour l'abonné ;
recevoir (1302), d'une première fonction de contrôle de politique configurée pour fonctionner dans le premier domaine, une demande de mise à jour de la valeur de l'utilisation autorisée vers une autre valeur ; et
mettre à jour (1303) les informations d'abonnement stockées en changeant la valeur de l'utilisation autorisée en l'autre valeur, dans lequel le premier domaine est un domaine visité, et le deuxième domaine est un domaine domestique pour l'abonné.

10. Appareil selon la revendication 9, l'appareil comprenant des moyens pour :
recevoir, de la première fonction de contrôle de politique, une demande d'au moins l'une parmi la valeur et l'autre valeur ; et
fournir la valeur demandée à la première fonction de contrôle de politique.

11. Appareil pour une fonction de gestion de session, l'appareil comprenant des moyens pour :
signaler (1401), à une fonction de gestion des données configurée pour fonctionner dans un deuxième domaine, une demande d'informations d'abonnement pour un abonné, dans lequel l'abonné est souscrit dans le deuxième domaine et la fonction de gestion de session est configurée pour fonctionner dans un premier domaine ;
recevoir (1402), de la fonction de gestion des données, une utilisation autorisée pour l'abonné ;
signaler (1403) une demande d'une politique pour une session pour l'abonné à une première fonction de contrôle de politique configurée pour fonctionner dans le même domaine que la fonction de gestion de session, la demande comprenant l'utilisation autorisée ; et
recevoir (1404) ladite politique de la première fonction de contrôle de politique, dans lequel le premier domaine est un domaine visité, et le deuxième domaine est un domaine domestique pour l'abonné.

12. Appareil pour une fonction de gestion des données configurée pour fonctionner dans un deuxième domaine, l'appareil comprenant des moyens pour :
recevoir (1501), d'une fonction de gestion de session configurée pour fonctionner dans un premier domaine, une demande d'informations d'abonnement pour un abonné souscrit dans le deuxième domaine ; et
signaler (1502) les informations d'abonnement stockées à la fonction de gestion de session, les informations d'abonnement stockées comprenant une indication d'une utilisation autorisée pour l'abonné, dans lequel le premier domaine est un domaine visité, et le deuxième domaine est un domaine domestique pour l'abonné.

13. Procédé pour un appareil destiné à une première fonction de contrôle de politique, le procédé comprenant les étapes suivantes :
recevoir (1201), d'une fonction de gestion de session, une demande d'une politique à établir pour une session pour un abonné, dans lequel l'abonné est souscrit dans un deuxième domaine et la première fonction de contrôle de politique est configurée pour fonctionner dans un premier domaine ;
déterminer (1202) une politique pour la session demandée, la politique déterminée comprenant une indication d'une utilisation autorisée pour l'abonné et au moins une condition de déclenchement pour la politique à mettre à jour ;
signaler (1203) l'au moins une condition de déclenchement à la fonction de gestion de session ; et
surveiller (1204) l'utilisation autorisée pour l'abonné en mettant à jour la politique en réponse à la réception d'une indication selon laquelle l'au moins une condition de déclenchement a été remplie, dans lequel le premier domaine est un domaine visité, et le deuxième domaine est un domaine domestique pour l'abonné.

14. Procédé pour un appareil pour une fonction de référentiel de données configurée pour fonctionner dans un premier domaine, le procédé comprenant les étapes suivantes :
stocker (1301) des informations d'abonnement pour un abonné, dans lequel l'abonné est souscrit dans un deuxième domaine, les informations d'abonnement comprenant une valeur d'une utilisation autorisée pour l'abonné ;
recevoir (1302), d'une première fonction de contrôle de politique configurée pour fonctionner dans le premier domaine, une demande de mise à jour de la valeur de l'utilisation autorisée vers une autre valeur ; et
mettre à jour (1303) les informations d'abonnement stockées en changeant la valeur de l'utilisation autorisée en l'autre valeur, dans lequel le premier domaine est un domaine visité, et le deuxième domaine est un domaine domestique pour l'abonné.

15. Procédé pour un appareil pour une fonction de gestion de session, le procédé comprenant les étapes suivantes :
signaler (1401), à une fonction de gestion des données configurée pour fonctionner dans un deuxième domaine, une demande d'informations d'abonnement pour un abonné, dans lequel l'abonné est souscrit dans le deuxième domaine et la fonction de gestion de session est configurée pour fonctionner dans un premier domaine ;
recevoir (1402), de la fonction de gestion des données, une utilisation autorisée pour l'abonné ;
signaler (1403) une demande d'une politique pour une session pour l'abonné à une première fonction de contrôle de politique configurée pour fonctionner dans le même domaine que la fonction de gestion de session, la demande comprenant l'utilisation autorisée ; et
recevoir (1404) ladite politique de la première fonction de contrôle de politique, dans lequel le premier domaine est un domaine visité, et le deuxième domaine est un domaine domestique pour l'abonné.

16. Procédé pour un appareil pour une fonction de gestion des données configurée pour fonctionner dans un deuxième domaine, le procédé comprenant les étapes suivantes :
recevoir (1501), d'une fonction de gestion de session configurée pour fonctionner dans un premier domaine, une demande d'informations d'abonnement pour un abonné souscrit dans le deuxième domaine ; et
signaler (1502) les informations d'abonnement stockées à la fonction de gestion de session, les informations d'abonnement stockées comprenant une indication d'une utilisation autorisée pour l'abonné, dans lequel le premier domaine est un domaine visité, et le deuxième domaine est un domaine domestique pour l'abonné.

17. Produit de programme informatique qui, lorsqu'il est exécuté sur un appareil destiné à une première fonction de contrôle de politique, amène l'appareil à effectuer les opérations suivantes :
recevoir (1201), d'une fonction de gestion de session, une demande d'une politique à établir pour une session pour un abonné, dans lequel l'abonné est souscrit dans un deuxième domaine et la première fonction de contrôle de politique est configurée pour fonctionner dans un premier domaine ;
déterminer (1202) une politique pour la session demandée, la politique déterminée comprenant une indication d'une utilisation autorisée pour l'abonné et au moins une condition de déclenchement pour la politique à mettre à jour ;
signaler (1203) l'au moins une condition de déclenchement à la fonction de gestion de session ; et
surveiller (1204) l'utilisation autorisée pour l'abonné en mettant à jour la politique en réponse à la réception d'une indication selon laquelle l'au moins une condition de déclenchement a été remplie, dans lequel le premier domaine est un domaine visité, et le deuxième domaine est un domaine domestique pour l'abonné.

18. Produit de programme informatique qui, lorsqu'il est exécuté sur un appareil pour une fonction de référentiel de données configurée pour fonctionner dans un premier domaine, amène l'appareil à effectuer les opérations suivantes :
stocker (1301) des informations d'abonnement pour un abonné, dans lequel l'abonné est souscrit dans un deuxième domaine, les informations d'abonnement comprenant une valeur d'une utilisation autorisée pour l'abonné ;
recevoir (1302), d'une première fonction de contrôle de politique configurée pour fonctionner dans le premier domaine, une demande de mise à jour de la valeur de l'utilisation autorisée vers une autre valeur ; et
mettre à jour (1303) les informations d'abonnement stockées en changeant la valeur de l'utilisation autorisée en l'autre valeur, dans lequel le premier domaine est un domaine visité, et le deuxième domaine est un domaine domestique pour l'abonné.

19. Produit de programme informatique qui, lorsqu'il est exécuté sur un appareil pour une fonction de gestion de session, amène l'appareil à effectuer les opérations suivantes :
signaler (1401), à une fonction de gestion des données configurée pour fonctionner dans un deuxième domaine, une demande d'informations d'abonnement pour un abonné, dans lequel l'abonné est souscrit dans le deuxième domaine et la fonction de gestion de session est configurée pour fonctionner dans un premier domaine ;
recevoir (1402), de la fonction de gestion des données, une utilisation autorisée pour l'abonné ;
signaler (1403) une demande d'une politique pour une session pour l'abonné à une première fonction de contrôle de politique configurée pour fonctionner dans le même domaine que la fonction de gestion de session, la demande comprenant l'utilisation autorisée ; et
recevoir (1404) ladite politique de la première fonction de contrôle de politique, dans lequel le premier domaine est un domaine visité, et le deuxième domaine est un domaine domestique pour l'abonné.

20. Produit de programme informatique qui, lorsqu'il est exécuté sur un appareil pour une fonction de gestion des données configurée pour fonctionner dans un deuxième domaine, amène l'appareil à effectuer les opérations suivantes :
recevoir (1501), d'une fonction de gestion de session configurée pour fonctionner dans un premier domaine, une demande d'informations d'abonnement pour un abonné souscrit dans le deuxième domaine ; et
signaler (1502) les informations d'abonnement stockées à la fonction de gestion de session, les informations d'abonnement stockées comprenant une indication d'une utilisation autorisée pour l'abonné, dans lequel le premier domaine est un domaine visité, et le deuxième domaine est un domaine domestique pour l'abonné.
